# EUROPEAN PATENT SPECIFICATION

(11) **EP 2 874 422 B1**
(45) Date of publication and mention of the grant of the patent: **10.08.2016**
(21) Application number: 13193146.1
(22) Date of filing: 15.11.2013
(51) Int. Cl.: H04W 12/08, H04W 76/02, H04W 84/12

(54) **SIMPLIFIED WI-FI SETUP**
VEREINFACHTER WI-FI-AUFBAU
ÉTABLISSEMENT DE WI-FI SIMPLIFIÉ

(43) Date of publication of application: 20.05.2015
(73) Proprietor: Vodafone Holding GmbH, 40213 Düsseldorf (DE)
(72) Inventor: Hartmann, Norman, D-40545 Düsselforf (DE)
(74) Representative: Jostarndt Patentanwalts-AG

(56) References cited:
- EP-A2- 2 608 447
- US-A1- 2010 046 486
- US-A1- 2013 103 939

## Description

### Field of the invention:

The invention relates to a method of setting up a secured connection between a requesting client and a secured wireless network. The invention further relates to a client, a routing device and a system being adapted to carry out the method or at least respective parts of the method.

### Background of the invention:

A standard procedure of setting up a secured connection between WiFi-devices or clients like mobile devices as smart phones, laptops or the like or clients like internet radios, TVs or the like and a secured wireless networks usually requires that an owner of the secured wireless network sets a standard password on a router. This standard password is stored in the router and is used for all clients to set up a wireless connection between the client and the router. The standard password can be a router password that belongs to one specific router. The owner enters the password as soon as a new client is connected to the secured wireless network or the owner discloses the password to a user of a mobile device if the user agrees to connect the mobile device to the secured wireless network. The procedure does have several drawbacks. The owner has to remember the password causing either rather simple passwords or requiring a hardcopy of the password such that the password may become insecure. Furthermore, the password has to be changed if the owner intends, for example, to deny the access of a previously accepted mobile device to the secured wireless network. In the latter case it may be necessary to manually log in again all other clients by entering the new password.

US 2013/0103939 A1 describes, for example, authentication of a mobile device by means of usernames and passwords which are stored in a database which can be contacted by an access point to access is requested by the mobile device.

EP 2608447 A2 discloses a wireless access point which comprises logic to generate a revocable key different to a master pre-shared key associated with a wireless network. The revocable key is provided to a client device and used to enable a secure connection between the wireless access point and the client device.

### Summary of the invention:

It's thus an object of the present invention to provide an improved method of setting up a secured connection between a requesting client and a secured wireless network. It's a further object of the present invention to provide accordingly adapted requesting clients, routing devices and systems.

According to a first aspect a method of setting up a secured connection between a requesting client and a secured wireless network is provided. The method comprises the steps of:
- generating an individual password by means of the requesting client for authentication of the requesting client;
- submitting the individual password to a routing device;
- requesting a confirmation for setting up the secured connection based on the individual password from a confirmation authority; and
- setting up the secured connection by means of the authentication of the requesting client based on the individual password by means of the routing device after receiving the confirmation of the confirmation authority.

Secured wireless networks are, for example, encrypted by means of Wi-Fi Protected Access II (WPA2). WPA2 is a security standard to secure computers connected to a Wi-Fi network. Its purpose is to achieve complete compliance with the IEEE 802.11 i standard, only partially achieved with the predecessor WPA, and to address a security flaw in the 128-bit "temporary key integrity protocol" (TKIP) in WPA by replacing it with the more sophisticated encryption algorithm "Counter Mode with Cipher Block Chaining Message Authentication Code Protocol" (CCMP). Details about WPA and WPA2 and related technologies can be found in the IEEE 802.11i standard which is incorporated by reference. Security protocols like WPA2 avoid access to the secured wireless network as long as, for example, no valid password is provided. The wireless network may be secured or encrypted by means of other security algorithms.

The current invention simplifies the process of providing a password by enabling the generation of an individual password, i.e. a client individual password by means of the requesting client. The current invention can simplify the process of setting up a secured connection between a client and a routing device, e.g. a WLAN-router owned by an individual or an operator, or a WLAN-router of an access point, by using the generated individual password for authentication of a requesting client in the secured wireless network and/or using the generated individual password for encrypting and decrypting the data traffic between the client and the access point.

The routing device may be a Wifi - hot spot or access point which is owned by the operator of the Wifi - hot spot or access point. This means the owner of the routing device can be an individual or a operator of the routing device, e.g. an operator of a Wifi - hot spot

The individual password may, for example, be manually generated by means of the owner of a requesting client. A smartphone may, for example, ask the owner of the smartphone to provide a password by typing, scanning or speaking. Anyhow, manual generation of passwords may be cumbersome because the owner of the client has to provide it. Furthermore, it may cause a security risk because human beings tend to provide simple passwords. In another embodiment the password is automatically generated by means of the requesting client. The requesting client may in this case comprise a processor being adapted by means of a software tool running on the processor and/or by means of circuitry to automatically generate an individual password. The generated individual password may be a random or a pseudo-random password. Automatically generating an individual password may have the advantage that the owner of the requesting client is not annoyed by generating the password. Furthermore, the algorithm used to generate the password may comprise guidelines in order to provide individual passwords fulfilling high security standards like at least 10 characters, comprising special characters, comprising capitals and small letters, comprising letters and numbers, no names or words and the like. The individual password may be generated without consulting the user of the requesting client or alternatively after getting a confirmation from the user. A smartphone may, for example, display the name of a secured wireless network in range and ask the user of the smartphone e.g. by means of the display whether a connection to the secured wireless is wanted. The owner of the smartphone confirms that a connection is wanted and the smartphone generates the individual password and submits the individual password to a routing device like a router of the secured wireless network. In an alternative case a client like an internet radio detects a secured wireless network and immediately generates an individual password and submits the individual password to the routing device. Anyhow, access to the secured wireless network is only enabled if a confirmation authority confirms that the requesting client is allowed to connect to the secured wireless network.

In general, a generated individual password can be any password. The individual password can be generated, for example, by manually typing or entering any password into the requesting client or it can be generated by the requesting client in an fully or half automated way. The individual password may be unknown to the routing device and also unknown to the requesting client until it is generated in the requesting client and submitted or send to the routing device. Therefore, it is not necessary to store or attach the individual password in or at the requesting client or routing device before it is generated in the requesting client and submitted to the routing device. The individual password may be automatically generated by an application or software that is installed on the requesting client. The step of submitting or sending the generated individual password from the requesting client to the routing device may be performed wirelessly or by cable, i.e. wired.

The confirmation authority may be any device like a mobile phone, smartphone, desktop computer, laptop, server or the like integrated in the hardware or running as a software application enabling the owner or operator of the routing device or the secured wireless network to receive the request of the requesting client. The confirmation authority may alternatively or in addition be integrated in the routing device as an activation or confirmation element or an input device, e.g.a push button, microphone, scanning NFC tag, enter a code via a display or the like in to be activated or pushed e.g. by the owner of the routing device after receiving the individual password from the requesting client in order to confirm the request and to establish the secured connection. The owner of the routing device receives the request in case of a private secured wireless network and can decide whether he grants or denies access to the secured wireless network. A confirmation is submitted to the routing device if the request is confirmed by means of the confirmation authority. The routing device stores the individual password generated by means of the requesting client and enables access to the secured wireless network based on the individual password. It may thus be possible to securely connect a multitude of clients to one routing device based on different individual passwords generated by means of the requesting clients. It's not necessary that the owner of the routing device has to remember one of the individual passwords. The connection to the secured wireless network may be a nearly automatic process whereby only a confirmation of the confirmation authority is needed. It may even be possible that the requesting client does not provide any kind of identification to the confirmation authority. An owner of a secured wireless network may receive, for example, a request from a smartphone of visiting friend sitting next to him. The friend wants to get access to secured wireless network in order to get fast access to the internet. The owner of the secured wireless network confirms the request comprising only the message "Grant access to the secured wireless network?" by means of typing "Yes" using, for example, his smartphone as confirmation authority such that the corresponding routing device enables connection to the secured wireless network. In an alternative approach a physical element, e.g. a push button or the like being part of the routing device may be activated by the owner of the routing device. It may also be possible that the routing device sends the request and offers in parallel the opportunity to push the push button. In most cases it may be preferred that an identification is provided with the request. The individual password is submitted to the routing device but the request submitted to the confirmation authority may not comprise the generated individual password in order to increase the security.

The request for confirmation for setting up the secured connection based on the individual password may be directly submitted by the routing device to the confirmation authority. The request for confirmation may be submitted wirelessly or in a wired way by the routing device to the confirmation authority. The confirmation authority e.g. a device owned and controlled by the owner of the routing device may be logged in to the secured wireless network such that the routing device submits the request to the owner and the owner can directly grant or deny access to the secured wireless network by means of the confirmation authority based on the generated individual password unknown to him. Alternatively or in addition a challenge center may be used in order to enable a confirmation by means of the same network technology or by means of different network technologies. This may be advantageous if the routing device may be associated to a Wi-Fi hot spot operated by a, for example, network provider as described in more detail below. The routing device may forward the request for confirmation for setting up the secured connection based on the individual password to the challenge center. The challenge center identifies the confirmation authority and requests the confirmation for setting up the secured connection based on the individual password from the confirmation authority. Request to access the secured wireless network may be forwarded via the internet or alternatively by means of mobile networks as GSM, UMTS, LTE or the like to the challenge center. The challenge center may be, for example, a server of a network provider in which the request of the routing device is matched to the confirmation authority which may be a mobile phone or smartphone of a customer of the network provider who is at the same time the owner of the secured wireless network. The request may, for example, be submitted to the smartphone of the owner of the routing device by means of Short Message Service (SMS) via the mobile network, via the internet by means of Emails or any other suitable network technology and messaging service. The owner of the routing device may confirm access to the secured wireless network by submitting an SMS to the server of the network provider and the server may submit an answer to the initial request to the routing device. The answer has to be in a format such that the routing device is able to understand the answer. The server of the network provider may thus convert the SMS provided by the confirmation authority meaning the smartphone of the owner of the routing device in a format which can be correctly interpreted by means of the routing device. Alternatively, it may be possible that the smartphone is adapted to provide the confirmation directly to the routing device after receiving the requesting SMS from the server. The latter may, for example, be the case if the smartphone is logged in the secured wireless network. The smartphone may in this case be adapted to convert the confirmation in a format which can be interpreted by means of the routing device or the routing device may be adapted to interpret confirmations provided in different formats. The challenge center may thus enable an interaction of different network technologies in order to provide a simplified access to a secured wireless network.

The secured wireless network may comprise a network identification or network name, e.g. a Service Set Identifier (SSID) which may be used to indicate compatibility to the simplified connection method. The requesting client may be adapted to identify compatible secured wireless networks such that the requesting client automatically selects one of the compatible secured wireless networks and generates the individual password if the requesting client is, for example, an internet radio. It may also be possible that the requesting client provides a list of secured wireless networks and indicates which of the networks is compatible with the simplified method such that the user of the requesting client can select one of the compatible networks in order to generate the individual password. The routing device may in this case be adapted to provide a conventional secured wireless network in which a predefined router specific password, i.e. a routing device individual or access point device individual password is used to get access and additionally a secured wireless network which is enabled to grant access based on a client individual password generated by a requesting client after confirmation by a confirmation authority.

An identifier for identifying the requesting client may be added to the individual password in order to increase the security as already indicated above. The identifier may be the Media Access Control (MAC) address of the requesting client. The requesting client may thus be uniquely identified by means of the routing device and/or the challenge center. Alternatively or in addition the identifier may comprise a code for identifying the user of the requesting client or the name of the user of the requesting client. The identifier may be used in combination with the individual password to grant access to the secured wireless network if the individual password corresponds to the correct requesting client. A requesting client providing an individual password which was confirmed by the confirmation authority wouldn't get access to the secured wireless network if, for example, no MAC address or the wrong MAC address is submitted in combination with the individual password. The identifier may comprise a component which can be used to check the trustworthiness of the requesting client and/or the user of the requesting client. An owner of the requesting client may, for example, be registered by means of a network provider. The network provider may also operate the challenge center. The confirmation authority may in a first approach be a part of the challenge center either in the form of specific hardware (processor, storage, etc...) or integrated as software application. The challenge center or the confirmation authority identifies in this case the requesting client by means of the identifier. The requesting client or the owner of the requesting client is registered in the confirmation authority in order to confirm the request. The confirmation authority automatically determines that the requesting client is allowed to set up a secured connection to the secured wireless network by means of the registration and submits the confirmation to the routing device. The routing device sets up the secured connection based on the individual password after receiving the confirmation. The confirmation is in this case automatically generated based on a registration of the requesting client and/or the user of the requesting client. It's thus possible to access, for example, Wi-Fi hot spots operated by a network provider offering access to the secured wireless network after, for example, registration to the corresponding service. The registered requesting client can access every Wi-Fi hot spot operated by the network provider based on each time newly generated individual passwords.

The challenge center may in case of an privately owned secured wireless network identify the requesting client or the user of the requesting client and submit e.g. an SMS to the confirmation authority comprising the request if the user of the requesting client is registered or if the user of the requesting client fulfills predefined security criteria. Furthermore, it may be possible in all cases to encrypt the identifier by means of e.g. symmetric or asymmetric encryption whereby the encryption key is known by the requesting client and the decryption key is known by the challenge center if the requesting client or the user of the requesting client is registered at the challenge center. The user of the requesting client (e.g. smartphone) may, for example, use the encryption keys stored in the SIM, USIM or the like of his smartphone if the user of the smartphone uses the same network provider operating the challenge center. Anyhow, the identifier may alternatively be used to confirm the trustworthiness of the user of the requesting client by means of an independent service provider being different from the network provider. The identifier may enable the routing device and/or the challenge center and/or confirmation authority to provide support to the owner of the secured wireless network with respect to decision to confirm access based on the generated individual password.

The individual password may have to fulfill certain security criterions like at least 10 characters, comprising special characters, comprising capitals and small letters, comprising letters and numbers, no names or words and the like. The routing device may be adapted to reject the individual password generated by means of the requesting client and request a new individual password. The routing device may provide a description of the security criteria such that the user of the requesting client can manually adapt the individual password. The description of the security criteria may alternatively or in addition be provided in a way that it can be automatically applied by means of the requesting client. The ability to reject an individual password increases the security because short and simple individual password can be avoided.

The secured connection between the requesting client and the secured wireless network may be terminated if a predefined condition is fulfilled. Termination means in this respect that a new confirmation of the confirmation authority is needed in order to enable further access to the secured wireless network. The new access to the secured wireless network may be based on the previously submitted individual password or a new individual password may be requested. Conditions triggering a termination may be, for example, time or time period of connection, whether a predefined data volume is exceeded, whether the connection between the secured wireless network and the requesting client is interrupted or the like. A predefined time of connection may be granted either automatically by means of the routing device or manually by means of the owner of the confirmation authority or the routing device. A time range of several minutes, hours or days may be granted. Alternatively or in addition termination of the connection may happen at a predefined daytime. A user of a requesting client may in this case only be allowed to access the secured wireless network between the confirmation by means of the confirmation authority at 5 pm and, for example, 6 pm of the same day. The latter may be used, for example, as a kind of child safety lock. Parents may be the owner of the confirmation authority and may be enabled to control access to the internet of their children. It may be preferred in this case to couple the predefined condition to an identifier or to a group of identifier (e.g. group my children). The identifier may even comprise a code indicating that the user of the requesting client belongs to a predefined group, for example, group of children at an age of 14 to 16. A request of a child of the owner or a child in general may in this case only be submitted to the confirmation authority within a predefined period of the day. Children may in this case only get the opportunity to access the secured wireless network between 6 pm and 8 pm. No request is submitted via the routing device or the challenge center outside this predefined time period and the connection may be automatically terminated at 8 pm in order to avoid excessive use of the internet. The latter condition may also be used with respect to other groups like, for example, visitors of a company. An alternative or additional predefined condition may be if the user of the requesting client tries to get access to predefined data. Such predefined data may be, for example, private data or more general data of a predefined security level. The data may be a web page or group of web pages. Termination of the connection to the secured wireless network may happen as soon as the user of the requesting client tries to access, for example, the group of webpages. The forbidden data or group of webpages may again be coupled to an identifier as described above. It may thus be possible to avoid, for example, access to forbidden data or webpages because the user of the requesting client needs to get a new confirmation by means of the confirmation authority after the connection was terminated. The owner of the secured wireless network may get information about the termination of the connection and the reason of termination via the routing device or the challenge center either upon termination or at the moment he receives a new request. The owner of the secured wireless network may define forbidden web pages by means of the routing device or the challenge center. The challenge center may enable more flexibility by offering, for example, different categories like children, shops and the like. The web pages which are forbidden are regularly updated based on the elected category. It may be necessary that the challenge center is operated by means of the service provider enabling access to the internet in order to control web access. Alternatively it may be that only access to the internet via the secured wireless network enabling access by means of individual passwords is handled via a service provider offering the service of a challenge center. The owner of the routing device may in this case use a standard access to the internet without any monitoring but user of requesting clients are monitored by means of the challenge center such that a termination can be triggered by means of the challenge center.

Termination of the connection between the requesting client and the secured wireless network may be triggered if the connection was interrupted. The individual password would expire as soon as an interruption of the connection is detected. Alternatively, the password expires after a predefined time of interruption in order to avoid unnecessary confirmation requests. Again it may be possible to combine this predefined condition with an identifier such that, for example, the individual password does not expire upon interruption of the connection for members of a predefined group of people (e.g. family) but expires for visitors. The owner of the secured wireless network is thus enabled to manage the people with access to the secured wireless network. Visitors may have to ask for confirmation to connect to the secured wireless network based on the generated individual password each time but members of the family may be allowed to connect to the secured wireless network based on an individual password generated and confirmed in the past. The different predefined condition of termination described above may be combined in any suitable way. Termination may be automatically initiated by means of the routing device if the predefined condition is met. Automatic termination may be supported by means of the challenge center by indicating to the routing device that a predefined condition is met. Alternatively, the owner of the secured wireless network may be automatically asked via the routing device or the challenge center by any suitable messaging service (Email, SMS...) whether the connection shall be terminated. The connection is terminated and the individual password expires upon confirmation by means of the confirmation authority.

The owner of the secured wireless network may be interested to know who is enabled to get access to the secured wireless network by means of a confirmation based on a generated individual password. The owner of the secured wireless network may thus receive upon request or automatically information regarding requesting clients being allowed to access the secured wireless network. A list with requesting clients may, for example, be provided. The owner of the secured wireless network may withdraw allowance to set up a secured connection to the secured wireless network from requesting clients, which were allowed to set up a secured connection to the secured wireless network. The user of such requesting clients thus need a new confirmation based on a newly generated individual password by means of the confirmation authority as soon as they try to connect to the secured wireless network after the allowance has been withdrawn. An easy and convenient method of managing access to the secured wireless network may thus be enabled.

According to a further aspect of the present invention a requesting client is provided. The requesting client is adapted to automatically generate an individual password for authentication of a setup to a secured wireless network. The requesting client like a smartphone, laptop, internet radio, TV or the like comprises a processing device and a storing device. A computer program product may be stored in the storing device after, for example, downloading from a network. The computer program product comprises code means for producing the steps of
- determining the presence of a secured wireless network;
- generating an individual password which may fulfill predefined security criteria; and
- submitting the individual password to a routing device of the secured wireless network when run on the processing device of the requesting client.

The requesting client may especially be enabled by means of the computer program product to generate the individual password automatically. The requesting client may be enabled to access the secured wireless network based on the generated individual password. The requesting client may be further adapted to determine whether the secured wireless network or the routing device of the secured wireless network is adapted to enable access to the secured wireless network based on the generated individual password. The requesting client may indicate
compatibility of the secured wireless network to a user of the requesting client in order to generate the individual password by means of the user or to confirm automatic generation of the individual password. The requesting client may be further adapted to automatically adapt the security level of generated passwords if access to a secured wireless network is denied because the security of the previously generated individual password was too weak.

According to a further aspect of the present invention a routing device for enabling access to a secured wireless network by means of requesting clients based on individual passwords generated by means of the requesting clients is provided. The routing device is adapted to receive an individual password generated by means of a requesting client for authentication of the requesting client. The routing device is further adapted to request a confirmation for setting up a secured connection based on an authentication of the requesting client by means of the individual password from a confirmation authority and to receive the confirmation from the confirmation authority. The secured connection between the secured wireless network and the requesting client is set up by means of the routing device by means of the authentication of the requesting client based on the individual password after receiving the confirmation from the confirmation authority. The routing device may comprise a router memory, a router processor and a router interface. A computer program product may be stored in the router memory after, for example, downloading from a network. The computer program product comprises code means for producing the steps of
- receiving a generated individual password from a requesting client;
- generating a request for confirmation to set up a connection between the requesting client and a secured wireless network;
- submitting the request to a confirmation authority; and
- setting up the connection between the requesting client and the secured wireless network after receiving the confirmation from the confirmation authority.

The routing device enables a convenient and secure connection based on individual passwords generated by means of the requesting clients. No common password is needed in order to enable access to the secured wireless network. Anyhow, the routing device may in addition be adapted to provide access to a secured wireless network by means of a fixed password provided by the routing device or the owner of the routing device. Alternatively or in addition it may be possible that the routing device is adapted to provide different secured wireless networks. The routing device may enable access to one of the secured wireless networks based on a conventional common password provided by means of the routing device or the owner of the secured wireless network and access to a different secured wireless network may be based on individually generated passwords provided by means of the requesting client in combination with the confirmation of the confirmation authority. The routing device may comprise the confirmation authority in an alternative approach. The confirmation authority may in this case be an input device like a push button, a microphone an optical sensor or any device which is adapted to receive an input to confirm the request from the owner of the secured wireless network or someone else being able and authorized to confirm the request.

According to a further aspect of the present invention a system for enabling access to a secured wireless network by means of requesting clients based on individual passwords generated by means of the requesting clients for authentication of the requesting client is provided. The system comprises a routing device and a challenge center. The routing device may be a routing device as described above. The routing device is adapted to receive an individual password generated by means of a requesting client. The routing device is further adapted to request a confirmation for setting up a secured connection based on an authentication of the requesting client by means of the individual password from a confirmation authority via the challenge center. The challenge center is adapted to forward the request to a confirmation authority and to receive the confirmation from the challenge center. The challenge center is further adapted to forward the confirmation to the routing device. The routing device is adapted to receive the confirmation from the challenge center and to set up the secured connection by means of the authentication of the requesting client based on the individual password received from the requesting client. The challenge center may enable authentication of the requesting client or the owner of the requesting client. The challenge center may be further adapted to enable an interface between different network technologies such that the confirmation may be requested by means of an automatic call, a SMS, an Email or any other messaging service suitable to transmit the request and the confirmation. The owner of the routing device may thus be enabled to grant access to the secured wireless network by means of any device being suited to receive the request and to transmit the confirmation. A flexible and convenient management of the secured wireless network is thus enabled. The challenge center may comprise one or more challenge center processing devices and challenge center memory devices in order to enable the functionalities of the system.

It shall be understood that the method of claim 1, the requesting client of claim 12, the routing device of claim 13 and the system of claim 15 have similar and/or identical embodiments, in particular, as defined in the dependent claims.

It shall be understood that a preferred embodiment of the invention can also be any combination of the dependent claims with the respective independent claim.

Further advantageous embodiments are defined below.

### Brief description of the drawings:

These and other aspects of the invention will be apparent from and elucidated with reference to the embodiments described hereinafter.

The invention will now be described, by way of example, based on embodiments with reference to the accompanying drawings.

In the drawings:
Fig. 1 shows a principal sketch of a first embodiment
Fig. 2 shows a principal sketch of a second embodiment
Fig. 3 shows a principal sketch of a third embodiment
Fig. 4 shows a principal sketch of a fourth embodiment
Fig. 5 shows a principal sketch of a fifth embodiment
Fig. 6 shows a process flow of getting access a secured wireless network based on an individually generated password
Fig. 7 shows a principal sketch of a requesting client
Fig. 8 shows a principal sketch of a routing device

In the Figures, like numbers refer to like objects throughout. Objects in the Figures are not necessarily drawn to scale.

### Detailed description of embodiments:

Various embodiments of the invention will now be described by means of the Figures.

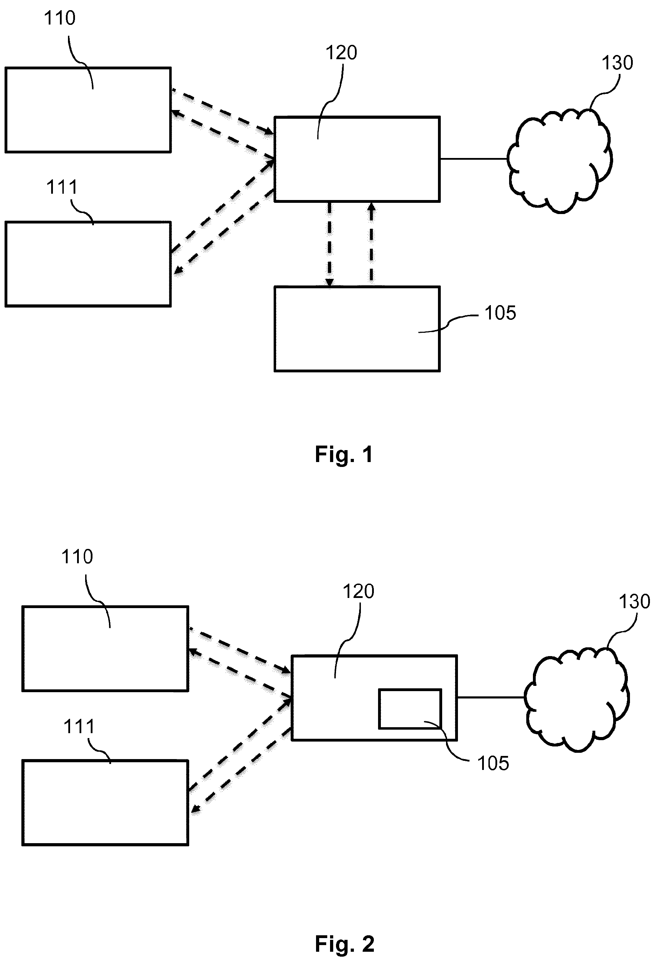

Fig. 1 shows a principal sketch of a first embodiment. A first requesting client 110 which may be smartphone and a second requesting client 111 which may be an internet radio try to access a secured wireless network via a routing device 120. The first requesting client 110 determines the presence of the secured wireless network and checks by means of the SSID of the secured wireless network whether an access to the secured wireless network by means of an individual password is possible. The first requesting client 110 indicates to a user of the first requesting client 110 by means of a display that he can log in in the detected secured wireless network based on an individual password and asks the user whether he intends to generate the individual password by means of an input unit of the first requesting client 110 or whether the individual password shall be generated automatically. The user decides that the individual password is automatically generated by means of the first requesting client 110 because the security level of the secured wireless network is very high causing complicated individual passwords. The first requesting client 110 automatically generates a first individual password and sends the first individual password together with an identifier comprising the name of the user of the first requesting client 110 or the MAC address of the requesting client 110 to the routing device 120. The routing device 120 receives the first individual password and the name of the user or the MAC address and generates a request for setting up a secured connection based on the first individual password from a confirmation authority 105 comprising the name of the user or the MAC address of the first requesting client 110 and submits the request to the confirmation authority 105 which is at this moment in time the desktop of the owner of the secured wireless network which is connected to the routing device 120 by means of a cable connection. The request is indicated to the owner of the wireless network by means of a message "Grant access to the secured wireless network to the user XY of the first requesting client?". The owner of the secured wireless networks selects the option that the user of the first requesting client 110 is allowed to access the secured wireless network for two hours and clicks the "Yes" button in order to confirm the request. The confirmation and the corresponding time limitation are transferred via the cable connection to the routing device 120 which establish a secured connection between the secured wireless network and the first requesting client 110 by means of the first individual password for the following two hours such that the user of the first requesting client can access a requested data resource 130 (e.g. internet) via the secured wireless network. The secured connection is terminated and the individual password expires after the two hours such that a new request comprising a new individual password and a new confirmation would be needed in order to establish a new secured connection. The owner of the secured wireless networks positions within the two hours the second requesting client 111 (internet radio) in his flat and switches the second requesting client 111 on. The second requesting client 111 detects the secured wireless layer, automatically generates a second individual password and submits the second individual password together with its MAC address to the routing device 120. The routing device 120 receives the second individual password and the MAC address and generates a request for setting up a secured connection based on the second individual password from the confirmation authority 105. The routing device submits the request to all devices which are used by the owner of the secured wireless network as confirmation authority 105. The owner is next to the second requesting client 111 and thus doesn't see the request submitted to the desktop but an activated tablet computer of the owner is next to the owner and logged in the secured wireless network. The tablet computer is one of the devices which are listed in the routing device 120 as potential confirmation authorities 105. The tablet computer receives the request via the secured wireless network. The request is indicated to the owner of the wireless network by means of a message "Grant access to the secured wireless network to the internet radio type Z?". The owner of the secured wireless networks selects the option that the second requesting client 110 is allowed to access the secured wireless network without restrictions and clicks the "Yes" button in order to confirm the request. The confirmation is transferred via the secured wireless network to the routing device 120 which establishes a secured connection between the secured wireless network and the second requesting client 111 by means of the second individual password provided by the internet radio such that the internet radio can receive radio programs via the secured wireless network.

Fig. 2 shows a principal sketch of a second embodiment. The confirmation authority 105 is in this case integrated in the routing device 120. The confirmation authority 105 may in this case be an input device like a push button, a microphone, an optical sensor or any device which can receive an input signal e.g. from the owner of the secured wireless network. The push button may, for example, comprise a signaling lamp indicating that a confirmation for setting up the secured connection based on the individual password is requested. The owner of the secured wireless network pushes the button in order to confirm the request such that the secured connection is set up based on the individual password. Alternatively or in addition an acoustic signal may be provided via a loudspeaker associated to a microphone acting together with an accordingly adapted hardware and/or software as confirmation authority. The acoustic signal indicates that a confirmation for setting up the secured connection based on the individual password is requested. The owner may say an acoustic order which may be a word like "accept" in order to confirm the request such that the secured connection is set up based on the individual password.

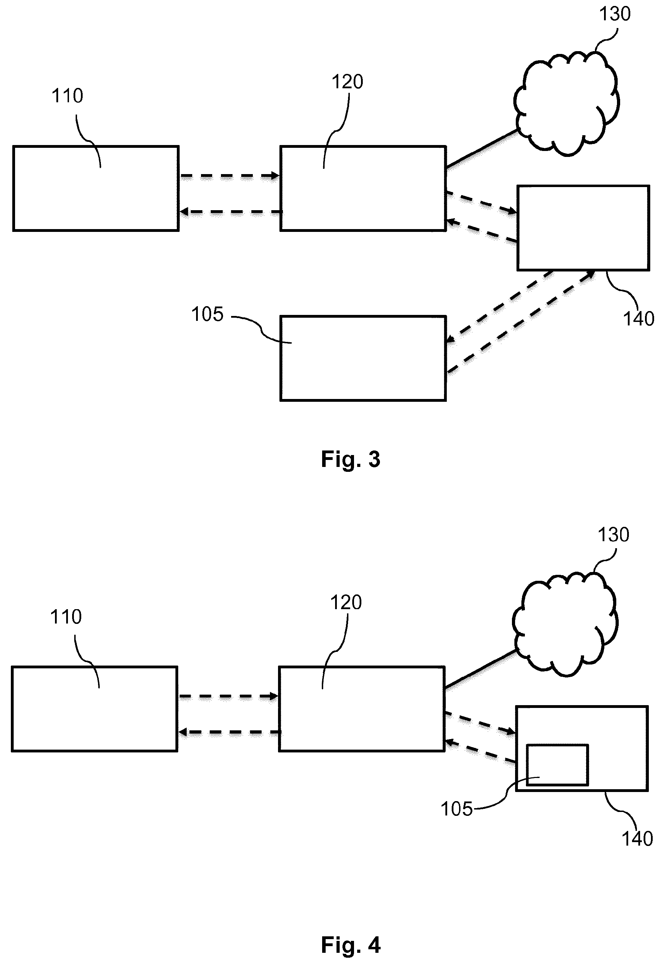

Fig. 3 shows a principal sketch of a third embodiment. A requesting client 110, a laptop of a user, determines the presence of a secured wireless network. The requesting client 110 determines based on the SSID of the secured wireless network that an authentication by means of a challenge center 140 is needed in order to get access to the secured wireless network. The requesting client 110 automatically detects that the user of the requesting client 110 is registered in the respective challenge center 140 and automatically generates an individual password and sends the individual password together with an identifier comprising in an encrypted form the name of the user of the requesting client 110 to a routing device 120 of the secured wireless network. The routing device 120 receives the individual password and the identifier and generates a request for setting up a secured connection based on the individual password from a confirmation authority 105. The routing device forwards the request together with the identifier via a cable connection to the challenge center 140. The challenge center 140 decrypts the identifier, determines that the user of the requesting client 110 is trustworthy and determines the owner of the secured wireless network by means of an address of the routing device 120. The challenge center 140 converts the request to an SMS message and submits the SMS comprising the request via a mobile network to the corresponding confirmation authority 105 which is stored in the challenge center 140. The confirmation authority 105 is a smartphone of the owner of the secured wireless network. The smartphone receives the request and displays the SMS to the owner of the secured wireless network. The owner of the secured wireless network submits a confirmation SMS to the challenge center 140. The confirmation SMS is converted in a format which can be interpreted by means of the routing device 120 and forwarded to the routing device 120. Finally, the routing device 120 establishes a secured connection between the secured wireless network and the requesting client 110 by means of the individual password such that the requesting client can access the requested data resource 130.

Fig. 4 shows a principal sketch of a fourth embodiment. The fourth embodiment is especially suited for Wi-Fi hot spots which are not owned by a human being but offer a service of a network provider which may also operate mobile networks as GSM, UMTS, LTE. A requesting client 110, e.g. a smartphone of a user, determines the presence of a secured wireless network. The requesting client 110 determines based on the SSID of the secured wireless network that a secured connection to the secured wireless network can be established after receiving a confirmation of a confirmation authority which is in this case implemented in a challenge center 140. The requesting client 110 automatically detects that the user of the requesting client 110 is registered in the respective challenge center 140 and automatically generates an individual password and sends the individual password together with an identifier comprising the MAC address of the requesting client 110 to a routing device 120 of the secured wireless network. The MAC address may be encrypted. The routing device 120 receives the individual password and the identifier and generates a request for setting up a secured connection based on the individual password from the confirmation authority 105. The routing device 120 forwards the request together with the identifier via a wireless connection, e.g. a GSM, UMTS, LTE, WLAN connection or a wired connection, e.g. DSL, fiber optics to the challenge center 140. The challenge center 140 may decrypt the identifier and forwards the decrypted identifier including the MAC address of the requesting client to the confirmation authority which may be a part of the challenge center 140 either in the form of specific hardware (processor, storage, etc...) or integrated as software application. The confirmation authority 105 identifies the requesting client 110, for example, by means of the MAC address which is registered in the confirmation authority 105. The confirmation authority 105 automatically determines that the requesting client 110 is allowed to set up a secured connection to the secured wireless network by means of the registration and submits the confirmation to the routing device 120. The routing device 120 sets up the secured connection based on the individual password after receiving the confirmation. The confirmation is in this case automatically generated based on a registration of the requesting client 110 and/or the user of the requesting client 110.

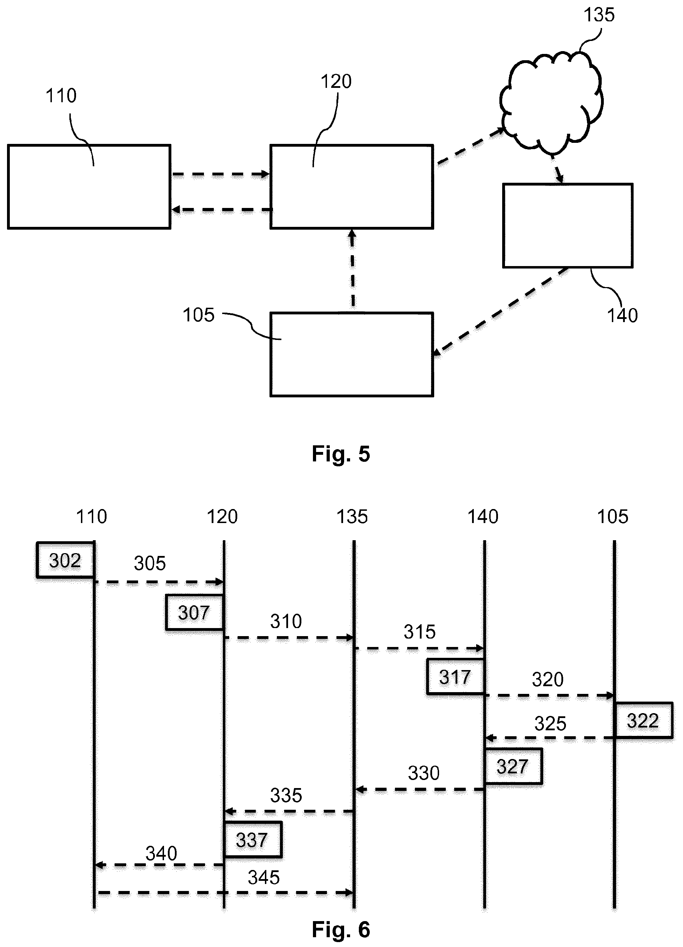

Fig. 5 shows a principal sketch of a fifth embodiment. A requesting client 110, a smartphone of a user, determines the presence of a secured wireless network. The requesting client 110 automatically generates an individual password and sends the individual password together with an identifier identifying the user of the requesting client 110 to a routing device 120 of the secured wireless network. The message with the individual password further comprises the information that the user request access to some specific data files saved in the desktop computer of the owner of the secured wireless network. The routing device 120 receives the individual password and the identifier and generates a request for setting up a secured connection based on the individual password from a confirmation authority 105 comprising the identifier and forwards the request together with the identifier via the internet 135 to the challenge center 140. The challenge center 140 determines the owner of the secured wireless network. The challenge center 140 converts the request to an Email message and submits the Email comprising the request via a mobile network to the corresponding confirmation authority 105 which is stored in the challenge center 140. The confirmation authority 105 is a laptop of the owner of the secured wireless network. The laptop receives the request and displays the Email to the owner of the secured wireless network. The owner of the secured wireless network checks to which data files access is requested and selects the data files to which he wants to grant access. The laptop is logged in in the secured wireless network and directly submits in a suitable format which can be interpreted by means of the routing device 120 the confirmation to the routing device 120 comprising the list of released data files. The routing device 120 establishes a secured connection between the secured wireless network and the requesting client 110 by means of the individual password such that the requesting client 110 can access the released data files.

Fig. 6 shows a process flow of getting access to a secured wireless network based on an individually generated password. A requesting client detects a secured wireless network. In step 302 an individual password is automatically generated by means of the requesting client 110. In step 305 is the individual password submitted to a routing device 120. In step 307 a request of confirmation for setting up a secured connection based on the individual password is generated by means of the routing device 120. In step 310 the request is forwarded together with an address of a challenge center 140 to the internet 135. In step 315 is the request forwarded to the challenge center 140. In step 317 a SMS comprising the request is generated in the challenge center 140 and a confirmation authority 105 is determined based on an address or identification of the routing device 120. The SMS is submitted in step 320 to the confirmation authority 105. The owner of the secured wireless network initiates the generation of a confirmation SMS in step 322. The confirmation SMS is forwarded to the challenge center 140 in step 325. In step 327 the confirmation is prepared in the challenge center 140 in a format which can be interpreted by means of the routing device 120. In step 330 is the confirmation forwarded to the internet 135 and in step 335 further forwarded to the routing device 120. In step 337 the individual password is released by means of the routing device 120 for establishing a secured connection to the internet 135 via the secured wireless network. In step 340 the secured connection is released by means of the routing device and in step 345 the internet is accessed by means of the requesting client 110 via the secured wireless network based on the individual password.

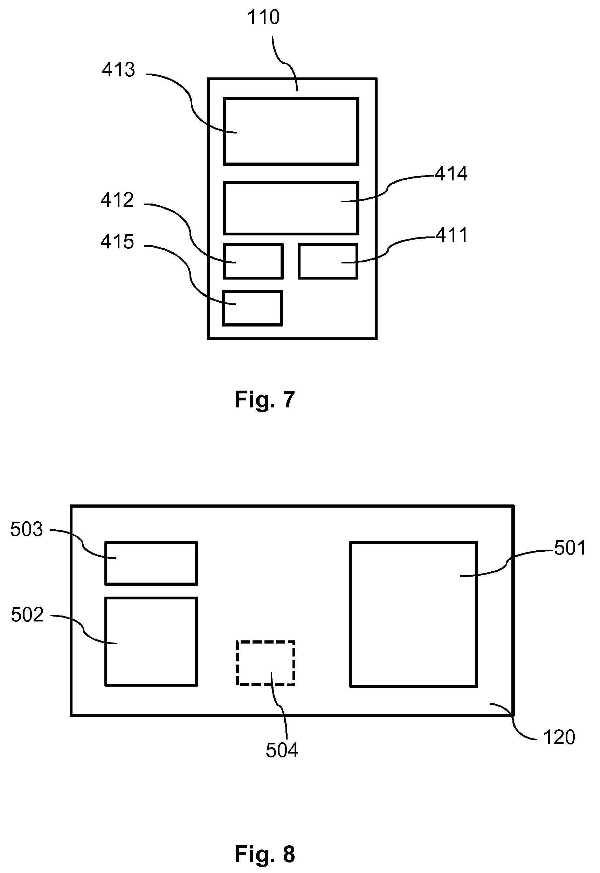

Fig. 7 shows a principal sketch of a requesting client 110. The requesting client 110 can be a mobile phone or a tablet comprising a main processor 411, a radio interface 412, a display 413, an input unit 414 and a secure element 415. Program code means enabling a connection to secured wireless network based on an individually generated password as described above are stored in the secure element 415. The secure element 415 is a SIM, USIM or the like enabling a connection to mobile networks like GSM, UMTS, LTE or the like. The secure element further enables encryption and decryption such that an identifier may be encrypted by means of the secure element 415. A secured wireless network may be detected via the radio interface 412. An individual password may be generated by means of the owner of the requesting client 110 by means of the input unit and the display. Alternatively, it may be automatically generated by means of either the secure element 415 or the main processor 411. The individual password is submitted via the radio interface 412 to a routing device 120 of the secured wireless network in order to establish a secure connection by means of the individual password.

Fig. 8 shows a principal sketch of a routing device 120. The routing device 120 comprises a router memory 501, a router processor 502 and a router interface 503. The address of a challenge center 140 and of a confirmation authority 105 are stored in the router memory 501. Furthermore, program code means are stored in the router memory 501 enabling the router processor 502 to request a confirmation for setting up a secured connection to the secured wireless network based on the individual password received via the router interface 503 from a confirmation authority 105, and setting up the secured connection based on the individual password after receiving the confirmation of the confirmation authority 105. The router interface 503 enables connection to the internet 135, the secured wireless network and optionally mobile networks as GSM, UMTS, LTE or the like.

The routing device 120 may optionally comprise a push button 504 which may act as confirmation authority 105. The program code means stored in the router memory 501 may enable in this case the router processor 502 to generate the request for confirmation by activating the push button 504. The, for example, owner of the routing device 120 confirms the request by means of pushing the push button 504. The program code means enable the router processor 502 to set up the secured connection based on the individual password after pushing the push button 504 and to deactivate the push button 504 until a further individual password is received via the router interface 503.

The described method enables a simple and convenient secured connection to a secured wireless network by means of individual passwords generated by means of requesting clients and a confirmation of the owner of the secured wireless network. Each requesting client preferably automatically generates its own individual password. A routing device of the secured wireless network generates a request which is either directly or indirectly submitted to a confirmation authority such that the owner of the secured wireless network can decide by means of the confirmation authority whether he agrees to the request or not. An answer of the owner submitted via the confirmation authority to the routing device enables the secured connection between the requesting client and the secured wireless network based on the individual password generated by means of the requesting client. The owner of the secured wireless network does not need to remember a special password in order to enable the secure connection. Furthermore, no new password has to be created if on requesting client shall be excluded from the secure connection. Access is denied for this special requesting client based on the corresponding individual password without affecting access right of other requesting clients.

While the invention has been illustrated and described in detail in the drawings and the foregoing description, such illustration and description are to be considered illustrative or exemplary and not restrictive.

From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. The mere fact that certain measures are recited in mutually different dependent claims does not indicate that a combination of these measures cannot be used to advantage.

Any reference signs in the claims should not be construed as limiting the scope thereof.

### List of reference numerals:

- 105: confirmation authority
- 110, 111: requesting client
- 120: routing device
- 130: requested data resource
- 135: internet
- 140: challenge center
- 302: step of automatically generating individual password
- 305: step of submitting the individual password
- 307: step of generating request
- 310: step of forwarding the request to the internet
- 315: step of forwarding the request to the challenge center
- 317: step of generating SMS
- 320: step of submitting the SMS
- 322: step of generating confirmation SMS
- 325: step of forwarding confirmation SMS to the challenge center
- 327: step of preparing confirmation for routing device
- 330: step of forwarding confirmation to the internet
- 335: step of forwarding confirmation to the routing device
- 337: step of releasing individual password
- 340: step of releasing secured connection
- 345: step of accessing the internet
- 411: main processor
- 412: radio interface
- 413: display
- 414: input unit
- 415: secure element
- 501: router memory
- 502: router processor
- 503: router interface
- 504: push button

## Claims

1. A method of setting up a secured connection between a requesting client (110, 111) and a secured wireless network, the method comprising the steps of:
- generating an individual password by means of the requesting client (110, 111) for authentication of the requesting client (110, 111);
- submitting the individual password to a routing device (120);
- requesting a confirmation for setting up the secured connection based on the individual password from a confirmation authority (105); and
- setting up the secured connection by means of authentication of the requesting client (110, 111) based on the individual password by means of the routing device (120) after receiving the confirmation of the confirmation authority (105).

2. The method according to claim 1, wherein the individual password is automatically generated.

3. The method according to claim 1 or 2, wherein the method comprises the further steps of:
- forwarding the request for confirmation for setting up the secured connection based on the individual password to a challenge center (140);
- identifying the confirmation authority (105) by means of the challenge center (140); and
- requesting the confirmation for setting up the secured connection based on the individual password from the confirmation authority (105) by means of the challenge center (140).

4. The method according to claim 1 or 2, wherein the method comprises the further steps of:
- identifying the confirmation authority (105) by means of the routing device (120); and
- requesting the confirmation for setting up the secured connection based on the individual password from the confirmation authority (105) by means of the routing device (120).

5. The method according to any of the preceding claims wherein the method comprises the further steps of:
- identifying the secured wireless network; and
- generating the individual password by means of the requesting client (110, 111) depending on the identified secured wireless network.

6. The method according to any of the preceding claims wherein the method comprises the further steps of:
- adding an identifier for identifying the requesting client (110, 111) to the individual password;
- determining an identification of the requesting client (110, 111) based on the identifier; and
- adding the identification of the requesting client (110, 111) to the request for confirmation for setting up the secured connection.

7. The method according to claim 6, wherein the identification of the requesting client (110, 111) is determined by means of the challenge center (140).

8. The method according to claim 6, wherein the identification of the requesting client (110, 111) is determined by means of the routing device (120).

9. The method according to any of the preceding claims wherein the method comprises the additional step of:
- terminating the secured connection between the requesting client (110, 111) and the secured wireless network if a predefined condition is fulfilled.

10. The method according to claim 9, wherein the secured connection between the requesting client (110, 111) and the secured wireless network is automatically terminated by means of the routing device (120) after fulfilling the predefined condition.

11. The method according to claim 9, wherein the method comprises the further steps of:
- informing by means of the routing device (120) the confirmation authority (105) that the predefined condition is fulfilled; and
- terminating the secured connection between the requesting client (110, 111) and the secured wireless network if the termination is confirmed by means of the confirmation authority (105).

12. A routing device (120) being adapted to receive an individual password generated by means of a requesting client (110, 111) for authentication of the requesting client (110, 111), the routing device (120) being adapted to request a confirmation for setting up a secured connection based on an authentication of the requesting client (110, 111) by means of the individual password from a confirmation authority (105), the routing device being adapted to receive the confirmation from the confirmation authority (105) and the routing device (120) being further adapted to set up the secured connection by means of the authentication of the requesting client (110, 111) based on the individual password after receiving the confirmation from the confirmation authority.

13. A routing device (120) according to claim 12 wherein the routing device (120) comprises the confirmation authority (105), and wherein the confirmation authority (105) is an input device (504) which is adapted to receive an input to confirm the request.

14. A system comprising a routing device (120) and a challenge center (140), the routing device (120) being adapted to receive an individual password generated by means of a requesting client (110, 111) for authentication of the requesting client (110, 111), the routing device (120) being adapted to request a confirmation for setting up a secured connection based on an authentication of the requesting client (110, 111) by means of the individual password from a confirmation authority (105) via the challenge center (140), the challenge center (140) being adapted to forward the request to a confirmation authority (140), the challenge center being adapted to receive the confirmation from the confirmation authority (105) and the challenge center being further adapted to forward the confirmation to the routing device (120), the routing device being adapted to receive the confirmation from the challenge center (140) and the routing device (120) being further adapted to set up the secured connection by means of the authentication of the requesting client (110, 111) based on the individual password.

## Patentansprüche

1. Verfahren zum Aufbauen einer gesicherten Verbindung zwischen einem anfordernden Client (110, 111) und einem gesicherten drahtlosen Netz, wobei das Verfahren die folgenden Schritte umfasst:
- Erzeugen eines individuellen Kennworts mittels des anfordernden Clients (110, 111) zur Authentifizierung des anfordernden Clients (110, 111);
- Übergeben des individuellen Kennworts an eine Routing-Vorrichtung (120);
- Anfordern einer Bestätigung zum Aufbauen der gesicherten Verbindung auf der Grundlage des individuellen Kennworts von einer Bestätigungsautorität (105); und
- Aufbauen der gesicherten Verbindung mittels Authentifizierung des anfordernden Clients (110, 111) auf der Grundlage des individuellen Kennworts mittels der Routing-Vorrichtung (120) nach Empfang der Bestätigung der Bestätigungsautorität (105).

2. Verfahren nach Anspruch 1, wobei das individuelle Kennwort automatisch erzeugt wird.

3. Verfahren nach Anspruch 1 oder 2, wobei das Verfahren die folgenden weiteren Schritte umfasst:
- Weiterleiten der Anforderung zur Bestätigung zum Aufbauen der gesicherten Verbindung auf der Grundlage des individuellen Kennworts an eine Authentisierungszentrale (140);
- Identifizieren der Bestätigungsautorität (105) mittels der Authentisierungszentrale (140); und
- Anfordern der Bestätigung zum Aufbauen der gesicherten Verbindung auf der Grundlage des individuellen Kennworts von der Bestätigungsautorität (105) mittels der Authentisierungszentrale (140).

4. Verfahren nach Anspruch 1 oder 2, wobei das Verfahren die folgenden weiteren Schritte umfasst:
- Identifizieren der Bestätigungsautorität (105) mittels der Routing-Vorrichtung (120); und
- Anfordern der Bestätigung zum Aufbauen der gesicherten Verbindung auf der Grundlage des individuellen Kennworts von der Bestätigungsautorität (105) mittels der Routing-Vorrichtung (120).

5. Verfahren nach einem der vorhergehenden Ansprüche, wobei das Verfahren ferner die folgenden weiteren Schritte umfasst:
- Identifizieren des gesicherten drahtlosen Netzes; und
- Erzeugen des individuellen Kennworts mittels des anfordernden Clients (110, 111) in Abhängigkeit von dem identifizierten gesicherten drahtlosen Netz.

6. Verfahren nach einem der vorhergehenden Ansprüche, wobei das Verfahren ferner die folgenden weiteren Schritte umfasst:
- Hinzufügen einer Kennung zum Identifizieren des anfordernden Clients (110, 111) zu dem individuellen Kennwort;
- Bestimmen einer Kennung des anfordernden Clients (110, 111) auf der Grundlage der Kennung; und
- Hinzufügen der Kennung des anfordernden Clients (110, 111) zu der Anforderung zum Bestätigen zum Aufbauen der gesicherten Verbindung.

7. Verfahren nach Anspruch 6, wobei die Kennung des anfordernden Clients (110, 111) mittels der Authentisierungszentrale (140) bestimmt wird.

8. Verfahren nach Anspruch 6, wobei die Kennung des anfordernden Clients (110, 111) mittels der Routing-Vorrichtung (120) bestimmt wird.

9. Verfahren nach einem der vorhergehenden Ansprüche, wobei das Verfahren den folgenden zusätzlichen Schritt umfasst:
- Abbauen der gesicherten Verbindung zwischen dem anfordernden Client (110, 111) und dem gesicherten drahtlosen Netz, falls eine vorgegebene Bedingung erfüllt ist.

10. Verfahren nach Anspruch 9, wobei die gesicherte Verbindung zwischen dem anfordernden Client (110, 111) und dem gesicherten drahtlosen Netz mittels der Routing-Vorrichtung (120) nach Erfüllung der vorgegebenen Bedingung automatisch abgebaut wird.

11. Verfahren nach Anspruch 9, wobei das Verfahren die folgenden weiteren Schritte umfasst:
- Informieren der Bestätigungsautorität (105), dass die vorgegebene Bedingung erfüllt ist, mittels der Routing-Vorrichtung (120); und
- Abbauen der gesicherten Verbindung zwischen dem anfordernden Client (110, 111) und dem gesicherten drahtlosen Netz, falls der Abbau mittels der Bestätigungsautorität (105) bestätigt wird.

12. Routing-Vorrichtung (120), die dafür ausgelegt ist, ein individuelles Kennwort zu empfangen, das mittels eines anfordernden Clients (110, 111) zur Authentifizierung des anfordernden Clients (110, 111) erzeugt worden ist, wobei die Routing-Vorrichtung (120) dafür ausgelegt ist, auf der Grundlage einer Authentifizierung des anfordernden Clients (110, 111) mittels des individuellen Kennworts von einer Bestätigungsautorität (105) eine Bestätigung zum Aufbauen einer gesicherten Verbindung anzufordern, wobei die Routing-Vorrichtung dafür ausgelegt ist, die Bestätigung von der Bestätigungsautorität (105) zu empfangen, und wobei die Routing-Vorrichtung (120) ferner dafür ausgelegt ist, mittels der Authentifizierung des anfordernden Clients (110, 111) auf der Grundlage des individuellen Kennworts nach Empfang der Bestätigung von der Bestätigungsautorität die gesicherte Verbindung aufzubauen.

13. Routing-Vorrichtung (120) nach Anspruch 12, wobei die Routing-Vorrichtung (120) die Bestätigungsautorität (105) umfasst und wobei die Bestätigungsautorität (105) eine Eingabevorrichtung (504) ist, die dafür ausgelegt ist, eine Eingabe zum Bestätigen der Anforderung zu empfangen.

14. System, das eine Routing-Vorrichtung (120) und eine Autorisierungszentrale (140) umfasst, wobei die Routing-Vorrichtung (120) dafür ausgelegt ist, ein individuelles Kennwort zu empfangen, das mittels eines anfordernden Clients (110, 111) zur Authentifizierung des anfordernden Clients (110, 111) erzeugt worden ist, wobei die Routing-Vorrichtung (120) dafür ausgelegt ist, auf der Grundlage einer Authentifizierung des anfordernden Clients (110, 111) mittels des individuellen Kennworts von einer Bestätigungsautorität (105) über die Authentisierungszentrale (140) eine Bestätigung zum Aufbauen einer gesicherten Verbindung anzufordern, wobei die Authentisierungszentrale (140) dafür ausgelegt ist, die Anforderung an eine Bestätigungsautorität (140) weiterzuleiten, wobei die Authentisierungszentrale dafür ausgelegt ist, von der Bestätigungsautorität (105) die Bestätigung zu empfangen, und wobei die Authentisierungszentrale ferner dafür ausgelegt ist, die Bestätigung an die Routing-Vorrichtung (120) weiterzuleiten, wobei die Routing-Vorrichtung dafür ausgelegt ist, von der Authentisierungszentrale (140) die Bestätigung zu empfangen, und wobei die Routing-Vorrichtung (120) ferner dafür ausgelegt ist, mittels der Authentifizierung des anfordernden Clients (110, 111) auf der Grundlage des individuellen Kennworts die gesicherte Verbindung aufzubauen.

## Revendications

1. Procédé de réglage d'une connexion sécurisée entre un client émettant une requête (110, 111) et un réseau sans fil sécurisé, le procédé comprenant les étapes de :
- générer un mot de passe individuel au moyen du client émettant une requête (110, 111) pour l'authentification du client émettant une requête (110, 111);
- soumettre le mot de passe individuel à un dispositif de routage (120) ;
- demander une confirmation pour établir la connexion sécurisée basée sur le mot de passe individuel d'une autorité de confirmation (105) ; et
- établir la connexion sécurisée par authentification du client émettant une requête (110, 111) basée sur le mot de passe individuel au moyen du dispositif de routage (120) après avoir reçu la confirmation de l'autorité de confirmation (105).

2. Procédé selon la revendication 1, dans lequel le mot de passe individuel est généré automatiquement.

3. Procédé selon la revendication 1 ou 2, dans lequel le procédé comprend les étapes supplémentaires de :
- transmettre la requête de confirmation pour établir la connexion sécurisée basée sur le mot de passe individuel vers un centre d'interrogation (140) ;
- identifier l'autorité de confirmation (105) au moyen du centre d'interrogation (140) ; et
- demander la confirmation pour établir la connexion sécurisée basée sur le mot de passe individuel de l'autorité de confirmation (105) au moyen du centre d'interrogation (140).

4. Procédé selon la revendication 1 ou 2, dans lequel le procédé comprend les étapes supplémentaires de :
- identifier l'autorité de confirmation (105) au moyen du dispositif de routage (120) ; et
- demander la confirmation pour établir la connexion sécurisée basée sur le mot de passe individuel de l'autorité de confirmation (105) au moyen du centre d'interrogation (140).

5. Procédé selon l'une quelconque des revendications précédentes dans lequel le procédé comprend les étapes supplémentaires de :
- identifier le réseau sans fil sécurisé ; et
- générer le mot de passe individuel au moyen du client émettant une requête (110, 111) en fonction du réseau sans fil sécurisé identifié.

6. Procédé selon l'une quelconque des revendications précédentes, dans lequel le procédé comprend les étapes suivantes de :
- ajouter un identifiant pour identifier le client émettant une requête (110, 111) au mot de passe individuel ;
- déterminer une identification du client émettant une requête (110, 111) basée sur l'identifiant ; et
- ajouter l'identification du client émettant une requête (110, 111) à la requête de confirmation pour établir la connexion sécurisée.

7. Procédé selon la revendication 6, dans lequel l'identification du client émettant une requête (110, 111) est déterminée au moyen du centre d'interrogation (140).

8. Procédé selon la revendication 6, dans lequel l'identification du client émettant une requête (110, 111) est déterminée au moyen du dispositif de routage (120).

9. Procédé selon l'une quelconque des revendications précédentes, dans lequel le procédé comprend l'étape supplémentaire de :
- mettre fin à la connexion sécurisée entre le client émettant une requête (110, 111) et le réseau sans fil sécurisé si une condition prédéfinie est remplie.

10. Procédé selon la revendication 9, dans lequel il est mis fin automatiquement à la connexion sécurisée entre le client émettant une requête (110, 111) et le réseau sans fil sécurisé au moyen du dispositif de routage (120) après avoir rempli la condition prédéfinie.

11. Procédé selon la revendication 9, dans lequel le procédé comprend les étapes suivantes de :
- informer l'autorité de confirmation (105), au moyen du dispositif de routage (120), que la condition prédéfinie est remplie ; et
- mettre fin à la connexion sécurisée entre le client émettant une requête (110, 111) et le réseau sans fil sécurisé si la fin est confirmée au moyen de l'autorité de confirmation (105).

12. Dispositif de routage (120) étant adapté pour recevoir un mot de passe individuel généré au moyen d'un client émettant une requête (110, 111) pour l'authentification du client émettant une requête (110, 111), le dispositif de routage (120) étant adapté pour demander une confirmation pour établir une connexion sécurisée basée sur une authentification du client émettant une requête (110, 111) au moyen du mot de passe individuel d'une autorité de confirmation (105), le dispositif de routage étant adapté pour recevoir la confirmation de l'autorité de confirmation (105) et le dispositif de routage (120) étant en outre adapté pour établir la connexion sécurisée au moyen de l'authentification du client émettant une requête (110, 111) basée sur le mot de passe individuel après réception de la confirmation de l'autorité de confirmation.

13. Dispositif de routage (120) selon la revendication 12, dans lequel le dispositif de routage (120) comprend l'autorité de confirmation (105), et dans lequel l'autorité de confirmation (105) est un dispositif de saisie (504) qui est adapté pour recevoir une saisie pour confirmer la requête.

14. Système comprenant un dispositif de routage (120) et un centre d'interrogation (140), le dispositif de routage (120) étant adapté pour recevoir un mot de passe individuel généré au moyen d'un client émettant une requête (110, 111) pour l'authentification du client émettant une requête (110, 111), le dispositif de routage (120) étant adapté pour demander une confirmation pour établir la connexion sécurisée basée sur une authentification du client émettant une requête (110, 111) au moyen du mot de passe individuel d'une autorité de confirmation (105) par le biais du centre d'interrogation (140), le centre d'interrogation (140) étant adapté pour transmettre la requête à une autorité de confirmation (105), le centre d'interrogation étant adapté pour recevoir la confirmation de l'autorité de confirmation (105) et le centre d'interrogation étant en outre adapté pour transmettre la confirmation au dispositif de routage (120), le dispositif de routage étant adapté pour recevoir la confirmation du centre d'interrogation (140) et le dispositif de routage (120) étant en outre adapté pour établir la connexion sécurisée au moyen de l'authentification du client émettant une requête (110, 111) basée sur le mot de passe individuel.
